# EUROPEAN PATENT APPLICATION

(11) **EP 1 026 366 A1**
(43) Date of publication of application: **09.08.2000**
(21) Application number: 00300868.7
(22) Date of filing: 03.02.2000
(51) Int. Cl.: F01D 5/26, F01D 5/28

(54) **Vibration damping coating**

(30) Priority: 05.02.1999 GB 9902900
(71) Applicant: ROLLS ROYCE PLC, London SW1E 6AT (GB)
(72) Inventor: Bagnall, Stephen Moray, Thornbury, Brstol BS35 1TB (GB); Shaw, David Llewellyn, Filton Park, Bristol BS7 0SA (GB); Yeo, Stuart, Brentry, Bristol BS10 6RR (GB)
(74) Representative: Carter, Stephen John

(57) **Abstract**

Viscous damping of vibrations of structural elements occurring at elevated temperatures is achieved by applying to a body (6) of the element (2) a coating (20) that includes an inner bonding layer (22) of a material which undergoes a transition to a more ductile state at the temperatures at which the vibrations are to be damped, and an outer ceramic oxide layer (24) secured to the body by the bonding layer. Viscous shear can then occur in the bonding layer as the relatively rigid outer ceramic oxide layer is subjected to the vibrations, so damping their amplitude. The materials of the bonding and ceramic oxide layers can be those conventionally used for thermal barrier coatings.

## Description

This invention relates to the damping of vibrations in structural elements. It is particularly concerned, but not necessarily exclusively so, with the damping the vibration of elements that are components of gas turbines.

The aerofoil members of axial gas turbines, for example, and in particular the rotating compressor and turbine blades, but also the static guide vanes, are structural elements subject to vibrations which reduce the fatigue life of the members and which can lead to premature cracking if the amplitude of vibration is sufficiently large.

It is known to use a variety of means to damp the vibrations in gas turbines, both of rotating parts and also of non-rotating parts such as combustion chambers and exhaust ducts, to reduce any adverse effects of the vibrations. The present invention is concerned with a form of passive damping that can be employed both with rotating and non-rotating parts of gas turbines and with other structural elements subject to vibration.

It is known to provide internal ducting in turbine blades of an axial flow gas turbine for a coolant flow that enables gas temperatures to be sustained that are close to or greater than the melting temperature of the metal from which the blade bodies are formed. It is also known to enhance the effectiveness of the cooling giving the metal body a thermal barrier coating (TBC) of ceramic oxide. Such coatings have been described, for example, in the paper "TBC and Other Surface Coatings; Benefits and Lifing Procedures", D.L Shaw, Paper No. 8 presented at the RTO AVT Workshop on "Qualification of Life Extension Studies for Engine Components", 5-6 October 1998 at Corfu, Greece, under the auspices of the NATO Research and Technology Organisation (AGARD SMP), and published in RTO MP-17.

In order to bond a layer of ceramic oxide onto the blade, there is first formed on the body of the blade which inhibits oxidation of the metallic substrate. The bonding layer may be an overlay of a metal/rare earth complex having the general formula MCrAlX where M is one or more metallic elements, and X is a rare earth element. Alternatively, the bonding layer may be formed as metallic diffusion coating.

After the application of the coating layer it is usual to subject the component to a high temperature heat treatment to promote diffusion and adhesion. When the component is cooled after the heat treatment the coating layer carries a residual strain because the bond coat has been heated beyond a brittle/ductile transition temperature (BDTT) above which an increased ductility results in creep. At the elevated temperatures at which the blade operates, the bonding layer will be at a temperature above the BDTT and also above the rather higher ductile/brittle transition temperature (DBTT) where the ductility will have increased further. Above the DBTT, because of the greater ductility of the material, little strain can be transmitted through the bonding layer to the ceramic oxide layer.

These phenomena are significant in TBCs because they determine the mechanism of cracking within or between the layers due to thermal expansion mismatch straining which leads to spalling of the ceramic oxide layer or open paths for oxidation that will accelerate delamination of the layers. In the present invention, the transition of the bonding layer to a more ductile state is utilized to different and novel end.

Thus, in one of its aspects the present invention is directed to the use of a coating on a metal body or substrate of a structural element as a means of vibration damping for the element, the coating comprising a first, bonding layer over which an outer ceramic oxide layer is applied, the bonding layer having a BDTT at which the transition to the ductile state occurs that is below a critical temperature at which the vibrations to be damped occur in the operation of the element, whereby at or above said critical temperature said bonding layer provides a visco-elastic interconnection between the body of the element and the ceramic oxide layer reducing vibrations that generate shear in said layer.

The critical temperature may be a temperature reached only in a transient phase of operation of the element or it may occur in a steady state of operation.

Preferably, the bonding layer DBTT at least equals the temperatures at which the vibrations to be damped occur, in order to obtain a greater damping effect, although some of the increase of ductility may be lost as the temperature rises appreciably beyond the DBTT.

The customary bonding layers for ceramic oxide TBCs such as are used on gas turbine blading are relatively thin as they serve solely to adhere the outer ceramic oxide layer to the metal substrate and form a barrier giving resistance to oxidation of the substrate. In an element according to the invention, the maximum thickness of the bonding layer maybe considerably greater to allow the ceramic oxide layer to act more effectively against a vibratory mode of the substrate. However, the bonding layer thickness should not be so large as to compromise structural integrity.

In an element according to the present invention, the bonding layer may be a metal/rare earth complex of the formula MCrAlX in which, as known per se, the metallic component M is preferably Fe, Co, Ni, or NiCO, and the rare earth element X is preferably Y, Ta, Th or Li, and possibly with platinum, tantalum or oxide dispersion strengthening elements as additions. For such a material, preferably the thickness is in the range 0.001 inch to 0.02 inch (0.025 mm to 0.5 mm).

The bonding layer may alternatively be a metallic layer diffused onto the substrate. The thickness of such a layer may have a somewhat lower limit, eg. not substantially less than 0.0005 inch (0.012 mm). Known examples of suitable diffused metallic layers include platinum aluminising, pack aluminising, vapour aluminising, possibly with a preceding electrolytic platinum deposition, or the layer may be formed by platinum or chromium or palladium alone.

The required damping effect will also influence the thickness of the ceramic oxide outer layer and any thermal insulation effect may be secondary. For example, a maximum thickness limit may be dictated for the outer layer by the resonant frequency the coating is required to damp. It may also be required to taken into account other operational loadings acting, such as the centrifugal force on a rotary blade which will itself impose shear loads on the bonding layer. Generally the ceramic oxide layer will have a thickness approximately between 0.005 inch and 0.040 inch (0.12 mm and 1 mm).

Any ceramic oxide can be used for the outer layer. One example is yttria partially stabilised zirconia (PYSZ), the yttria content normally being in the range of 5% to 35%, preferably about 6% to 8%.

The layers of the coating may be deposited by any known process, such as air plasma spray, including shrouded plasma spray and low pressure plasma spray, as well as by physical or chemical vapour deposition.

In the application of the coatings, the thickness may be varied over the extent of the structural element in order to achieve an optimum damping effect. For example, under many vibratory modes the maximum amplitude of displacement will vary locally over the element and it may be arranged that the thickness of the bond layer is increased and decreased in dependence upon the local maximum amplitude. Similarly, the thickness of the ceramic oxide layer may be varied to optimise the damping effect and/or to reduce the weight of the coating.

According to another aspect of the invention, therefore, a structural element extending from a support comprises a body provided with a vibration damping coating comprising a first, bonding layer over which an outer ceramic oxide layer is applied, the bonding layer having a BDTT in which the transition to the ductile state occurs at a temperature below a critical temperature at which the vibrations to be damped occur in the operation of the element, whereby said bonding layer provides a visco-elastic interconnection between a body of the element and the outer layer, said coating being confined to or having a greater thickness at a part of the body spaced from said support.

The examples of the layer materials referred to above are also applicable to the coating of a structural element according to this aspect of the invention.

One important application of such non-uniform coatings is for the damping of vibrations in aerofoil members, such as guide vanes or rotary blading, particularly members having an aerofoil surface with an aspect ratio of 2 or more. For example, where the surface is provided by an element that projects in cantilever manner from a mounting, vibrations will commonly be experienced more in the tip region remote from the mounting and the coating can accordingly be confined to that region or given an increased thickness there.

By such means it is possible to damp in an optimum manner vibratory modes of high aspect ratio turbine or compressor blades which cannot be effectively damped by known methods such as under-platform sliding damping.

An example of the use of the invention is illustrated in the accompanying drawings, in which:
Fig. 1 is a side view of a turbine blade of a gas turbine on which a displacement contour plot has been superimposed,
Fig. 2 is a similar view of the blade to which a vibration damping coating in accordance with the invention has been applied, and
Fig. 3 is a section of the blade of Fig. 2 on the plane III-III.

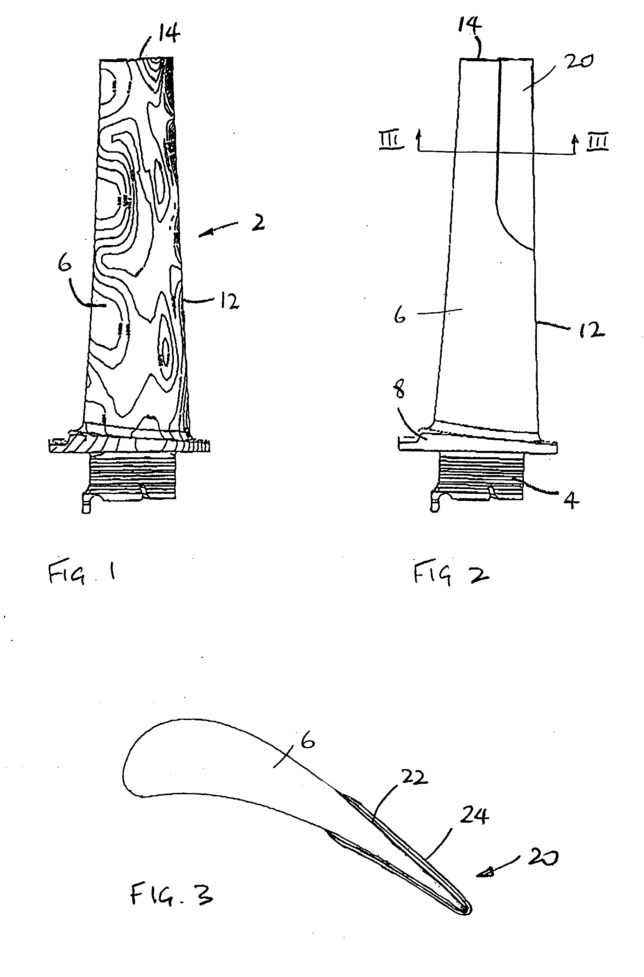

Fig. 1 shows an unshrouded low pressure turbine blade 2 with a root 4 by means of which it is mounted in a turbine disc (not shown), and a high aspect ratio aerofoil element 6 extending integrally from a platform 8. On the aerofoil element 6 there is drawn a displacement contour plot for a complex vibratory mode of the blade. The closeness of the contour lines is an indication of the gradient (rate of change of displacement per unit length) of the vibratory displacements of the aerofoil element 6 and it is noteworthy that the predominant motion is towards the trailing edge 12 and the outer tip 14 of the element. A plot of surface strain would shown that the greater part of the aerofoil element has negligible levels of surface strain away from this edge-tip region.

Particularly in the case of high aspect ratio turbine blades, ie. having an aspect ratio of 2 or more, vibratory modes can develop away from the root of the blade and effective damping can be obtained by applying a local coating, eg. to the trailing edge region near the blade tip.

Figs. 2 and 3 show a visco-elastic damping coating 20 applied to the edge-tip region. The coating consists of a 0.25 mm FeCrAlY bonding layer 22 applied directly to the metal substrate of the blade and a 7% yttria partially stabilised zirconia layer 24 0.5 mm thick applied to the bonding layer by air plasma spray. It will be understood that the thickness of the layers have been exaggerated in Fig. 3 for clarity of illustration.

The FeCrAlY complex is chosen for the bond coat because the material is in a ductile state at the temperature range in which the blade vibratory mode is in a condition of resonance. The thickness of the coating is sufficiently great to be effective for damping but is not so great as to compromise mechanical integrity. The ceramic oxide coating chosen has a high rigidity when the blade vibratory mode is in a condition of resonance and so will constrain the bonding layer as vibration occurs to generate viscous shear damping.

As with MCrAlX complexes generally, the FeCrAlY layer will exist in a relatively brittle state at ambient temperature but undergoes the transition to a ductile state with a rise in temperature. The change of behaviour first appears as the brittle/ductile transition temperature (BDTT) is passed. Ductility then increases rapidly with further rise of temperature to a maximum at the ductile/brittle transition temperature (DBTT) and thereafter decreases, but only slowly. The required effects for performance of the invention can therefore be achieved by a bond layer composition that has exceeded its BDTT sufficiently to show a significant degree of ductility although the optimum state is reached near or above the DBTT.

At temperatures below the transition the non-ductile nature of the bonding layer will generate residual stresses in it due to the constraints of the body of the structural element and the outer ceramic oxide layer. These residual stresses will depend both on the temperature range the layer is subjected to while in the brittle state and on the thickness of the layer, and they may impose a limit on the maximum thickness of the bonding layer.

The constraints on the bonding layer are due, at least in large part, to the fact that the ceramic oxides of the outer layer have a low coefficient of thermal expansion as compared with the metal alloys typically employed for the bodies or substrates of the structural elements to which the coatings are applied. The bond layer acts, when in the ductile state, to absorb the interface strains between the substrate and the outer layer, but while in the brittle state it can experience high stress levels. If the bond layer is too thick, excessive stresses occurring in the brittle state can cause local separation, which will reduce damping effectiveness and possibly lead to spalling of the ceramic oxide layer.

Above the BDTT, and more so as the DBTT is reached, the stresses in the bonding layer are substantially reduced as it becomes more ductile and it also allows relative displacement to take place between the ceramic oxide outer bonding layer and the body of the element. In-plane strains will occur in the bonding layer in vibratory modes of the element due to the inertia of the outer layer and, dependent upon the elastic modulus of the bonding layer a damping effect is produced limiting the vibrations.

Damping coatings according to the invention can be adapted to various modes of vibration of a blade, eg. for first flap, first edgewise or first torsion, in which a relatively uniformly distributed surface strain appears in the body of the aerofoil element, the whole area or substantially the whole area of the element may be coated to damp vibrations. In those vibratory modes where the surface strains are mainly localised to a particular region of the blade as in the illustrated example, the coating can be similarly localised, or the thicknesses of the layers may be increased in that region to give the damping effect in the most economical manner.

Vibration may also occur as a result of the onset of flutter, a non-resonant self-exciting condition. This phenomenon can occur in particular in high aspect ratio blading and requires damping to avoid excessive vibratory strains.

In the illustrated example described, the vibrations to be controlled occur in a transient state as a resonance of the system, but in other instances there may be a need to control vibration at a steady operating state. In either case it is possible to define the temperature at which the structural elements are operating when the vibration occurs. By appropriate choice of the bonding layer composition, a suitable transition temperature can be obtained to ensure that the damping action appears at the appropriate stage in an operating cycle.

## Claims

1. The use of a coating on a metal body or substrate of a structural element as a means of vibration damping for the element, the coating comprising a first, bonding layer over which an outer ceramic oxide layer is applied, the bonding layer having a brittle-ductile transition temperature (BDTT) at which the transition to the ductile state occurs that is below a critical temperature at which the vibrations to be damped occur in the operation of the element, whereby at or above said critical temperature said bonding layer provides a visco-elastic interconnection between the body of the element and the ceramic oxide layer reducing vibrations that generate shear in said layer.

2. The use of a coating according to claim 1 wherein the bonding layer is a metal/rare earth complex coating having the general formula MCrAlX (where M is one or more metallic elements, and X is a rare earth element) or is a metallic diffusion coating.

3. The use of a coating according to claim 2 wherein X is Y, Ta, Th or Li.

4. The use of a coating according to any one of claims 1 to 3 wherein the bonding layer coating thickness is in the range 0.001 inch to 0.2 inch (0.025 mm to 0.5 mm).

5. The use of a coating according to any one of claims 1 to 3 wherein the bonding layer coating thickness is not substantially less than 0.05 inch (0.1 mm) and is preferably at least 0.08 inch (0.2 mm).

6. The use of a coating according to claim 2 wherein the bonding layer is formed at least in part by aluminising, pack aluminising, vapour aluminising or by diffusion of platinum, chromium or palladium.

7. The use of a coating according to claim 6 wherein the bonding layer is not substantially less than 0.0005 inch (0.012 mm) thick.

8. The use of a coating according to any one of the preceding claims applied to the structural element in different thicknesses at different regions of the element or applied only partially to the surface of the element.

9. The use of a coating according to any one of the preceding claims for the damping of vibrations occurring in the operation of said structural element at a temperature not substantially less than a ductile/brittle transition temperature of the bonding layer.

10. A structural element arranged to extend from a support and provided with a vibration damping coating on a body of said element comprising a first, bonding layer over which an outer ceramic oxide layer is applied, the bonding layer having a brittle-ductile transition temperature (BDTT) in which the transition to the ductile state occurs at a temperature below a critical temperature at which the vibrations to be damped occur in the operation of the element, whereby said bonding layer provides a visco-elastic interconnection between the body of the element and the outer layer, said coating being confined to or having a greater thickness at a part of the body spaced from said support.

11. A structural element according to claim 10 wherein the bonding layer is a metal/rare earth complex coating having the general formula MCrAlX (where M is one or more metallic elements, and X is a rare earth element), or is a metallic diffusion coating.

12. A structural element according to claim 11 wherein X is Y, Th or Li.

13. A structural element according to any one of claims 10 to 12 wherein the bonding coating thickness is in the range 0.001 inch to 0.2 inch (0.025 mm to 0.05 mm).

14. A structural element according to any one of claims 10 to 12 wherein the bonding coating thickness is not substantially less than 0.05 inch (0.1 mm) and is preferably at least 0.08 inch (0.2 mm).

15. A structural element according to claim 11 wherein the bonding layer is formed at least in part by aluminising, pack aluminising, vapour aluminising or by diffusion of platinum, chromium or palladium.

16. A structural element according to claim 15 wherein the bonding layer is not substantially less than 0.0005 inch (0.012 mm) thick.

17. A structural element according to any one of claims 10 to 16 wherein said body has an aerofoil surface to which said coating is applied.

18. A structural element according to claim 17 wherein the aerofoil surface has an aspect ratio of 2 or more.
